# EUROPEAN PATENT APPLICATION

(11) **EP 4 640 609 A1**
(43) Date of publication of application: **29.10.2025**
(21) Application number: 24172269.3
(22) Date of filing: 24.04.2024
(51) Int. Cl.: B66C 1/02, B29C 70/54

(54) **LIFTING TOOL**

(71) Applicant: LM Wind Power A/S, 6000 Kolding (DK)
(72) Inventor: Edmund NANGOI, Idryan, 6640 VINGEN (DK)
(74) Representative: ZBM Patents - Zea, Barlocci & Markvardsen

(57) **Abstract**

There is provided a lifting tool 400 for placing a spar cap 500 in a blade mould. The lifting tool 400 comprises a lifting structure 410, a plurality of vacuum elements 420 connected to the lifting structure 410 for releasably attaching the spar cap 500 and an anti-falling mechanism 430 connected to the lifting structure 410. The anti-falling mechanism 430 is configured to change between a closed state for blocking a movement of the spar cap 500 and an open state for allowing a movement of the spar cap 500 relative to the anti-falling mechanism 430.

## Description

The present disclosure relates to a lifting tool for placing a spar cap in a blade mould and a method of placing a spar cap in a blade mould using a lifting tool.

### BACKGROUND

During manufacture of a wind turbine blade, it is typically necessary manoeuvre the spar cap. For example, it may be necessary to place the spar cap in a blade mould. The spar cap may be placed in the blade mould using a system of vacuum elements to lift the spar cap. However, in case the vacuum fails or is insufficiently strong, it is important to use a safety feature.

The most common safety feature comprises a belt or strap. The belt is located underneath the spar cap to hold the spar cap in case of vacuum loss. A drawback of using a belt as a safety feature is that positioning the belt so that it holds the spar cap in case of vacuum loss and removing the belt on placing the spar cap in the blade mould may be considered work under suspended load (WUSL).

WUSL is hazardous, as there is a risk of the spar cap, for instance, falling on or striking persons undertaking the WUSL. Further, due to the precautions that are necessitated by WUSL, WUSL may be time consuming (e.g., it may be necessary to attach several belts to hold the spar cap in the case of vacuum loss).

Hence, there is a need for a tool for placing a spar cap in a blade mould and a method of placing a spar cap in a blade mould that eliminates or reduces WUSL.

### SUMMARY

According to a first aspect of the present disclosure, there is provided a lifting tool for placing a spar cap in a blade mould. The lifting tool comprises a lifting structure, a plurality of vacuum elements connected to the lifting structure for releasably attaching the spar cap and an anti-falling mechanism connected to the lifting structure. The anti-falling mechanism is configured to change between a closed state for blocking a movement of the spar cap and an open state for allowing a movement of the spar cap relative to the anti-falling mechanism.

The first aspect is advantageous, because, in the case of any vacuum loss, the anti-falling mechanism may hold the spar cap. Further advantageously, the anti-falling mechanism may be used without any manual intervention, thereby eliminating WUSL. In other words, the anti-falling mechanism eliminates the need for operators to attach belts, for example, along the spar cap to hold the spar cap in the case of vacuum loss. Eliminating the need for operators to attach belts, for example, along the spar cap to hold the spar cap in the case of vacuum loss may, advantageously, engender reduced labour cost and greater efficiency, as well as reduced risk of injury.

According to a second aspect of the present disclosure, there is provided a method for placing a spar cap in a blade mould using a lifting tool. The method comprises moving the lifting tool to the spar cap, releasably attaching a plurality of vacuum elements of the lifting tool to a surface of the spar cap, moving an anti-falling mechanism of the lifting tool to a closed state for blocking a movement of the spar cap, moving the lifting tool to the blade mould to place the spar cap in the blade mould, moving the anti-falling mechanism to an open state for allowing a movement of the spar cap relative to the anti-falling mechanism and detaching the plurality of vacuum elements from the surface of the spar cap when the anti-falling mechanism is in the open state.

Advantages derived from the second aspect may be the same or similar to those mentioned regarding the first aspect.

### BRIEF DESCRIPTION OF THE DRAWINGS

Non-limiting examples of the present disclosure will be described in the following, with reference to the appended drawings, in which:
Figure 1 shows a perspective view of a wind turbine;
Figure 2 shows a perspective view of a wind turbine blade;
Figure 3 shows a cross-sectional view of a wind turbine blade;
Figure 4 shows a perspective view of a lifting tool for placing a spar cap in a blade mould;
Figure 5 shows a frontal view of a lifting tool for placing a spar cap in a blade mould;
Figure 6 shows a frontal view of a lifting tool for placing a spar cap in a blade mould; and
Figure 7 shows a frontal view of a lifting tool for placing a spar cap in a blade mould; and
Figure 8 shows a flow chart of a method of placing a spar cap in a blade mould using a lifting tool.

### DETAILED DESCRIPTION OF EXAMPLES

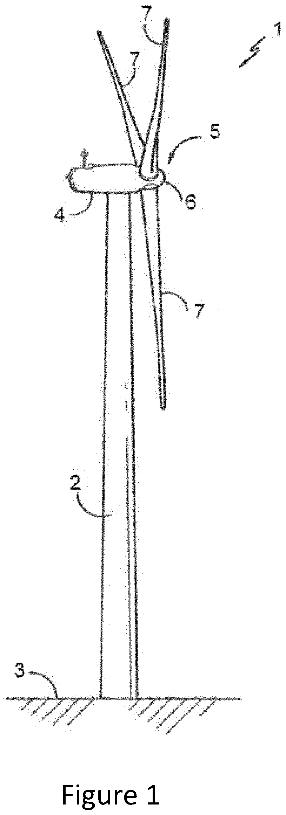

Figure 1 shows a perspective view of an example of a wind turbine 1. As shown, the wind turbine 1 includes a tower 2 extending from a support surface 3, a nacelle 4 mounted on the tower 2 and a rotor 5 coupled to the nacelle 4. The rotor 5 includes a rotor hub 6 and at least one wind turbine blade 7 coupled to and extending outwardly from the rotor hub 6. In the illustrated example, the rotor 5 includes three wind turbine blades 7. However, the rotor 5 may include more or less than three wind turbine blades 7. Each wind turbine blade 7 may be spaced from the rotor hub 6 to facilitate rotating the rotor 5 to enable kinetic energy to be transferred from the wind into usable mechanical energy and, subsequently, electrical energy. For instance, the rotor hub 6 may be rotatably coupled to an electric generator positioned within the nacelle 4 or forming part of the nacelle 4 to permit electrical energy to be produced.

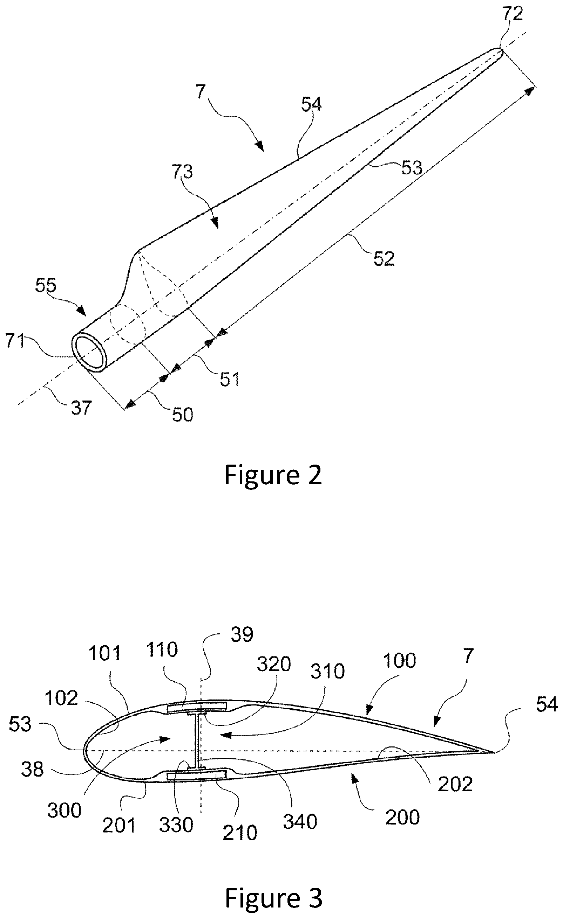

Figure 2 shows an example of a wind turbine blade 7. The wind turbine blade 7 extends in a longitudinal direction or lengthwise direction 37 from a blade root end 71 to a blade tip end 72. The wind turbine blade 7 comprises a blade root region or portion 50 closest to the rotor hub 6, a profiled or an airfoil portion 52 furthest away from the rotor hub 6 and a transition portion 51 between the blade root portion 50 and the airfoil portion 52. The wind turbine blade 7 comprises a leading edge 53 facing the direction of rotation of the wind turbine blade 7 when mounted on the rotor hub 6 and a trailing edge 54 facing the opposite direction of the leading edge 53.

The airfoil portion 52 has a shape designed to generate lift, whereas the blade root portion 50 has a circular or elliptical cross-section for structural considerations and easy mounting of the blade to the rotor hub 6. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub 6 through a blade root attachment portion 55.

The wind turbine blade 7 comprises a blade shell 73. The blade shell 73 comprises an outer side or surface that defines the external shape of the wind turbine blade 7 (e.g., the outer shape at the blade root portion 50 and the outer shape at the airfoil portion 52). The blade shell 73 also comprises an inner side or surface that defines the internal volume of the wind turbine blade 7 and faces a load-carrying structure (not shown). The blade shell 73 may be made of fibre-reinforced polymer or plastics (e.g., glass fibre and/or carbon fibre).

The blade shell 73 may be formed by a plurality of blade shell parts. The plurality of blade shell parts may be joined together to form the blade shell 73. The blade shell parts may be formed and then joined according to any of the examples herein disclosed. For example, resin infusion technology, such as RTM (resin transfer moulding) or VARTM (vacuum assisted resin transfer moulding), or prepreg technology may be used for manufacturing the blade shell parts.

In some examples, the blade shell 73 comprises a lower side blade shell part and an upper blade shell part. The lower side blade shell may be a pressure side blade shell part. The upper blade shell part may be a suction side blade shell part. The lower side blade shell part may be joined to the upper side blade shell part along joining lines along the leading edge 53 and the trailing edge 54. Each of these blade shell parts may be manufactured in a mould and then joined together to define the entire blade shell of the wind turbine blade 7. A reinforcing structure is arranged between the lower side blade shell part and the upper side blade shell part.

Figure 3 shows a cross-sectional view of a wind turbine blade 7 according to one example of the present disclosure. A suction side blade shell part or upper blade shell part 100 and a pressure side blade shell part or lower blade shell part 200 extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100 and the lower blade shell part 200 are joined (e.g., bonded) together along the leading edge 53 and the trailing edge 54.

The upper blade shell part 100 comprises an upper outer layer 101 and an upper inner layer 102. The upper outer layer 101 defines an outer shape of the upper blade shell part 100 and the upper inner layer 102 defines an inner shape of the upper blade shell part 100. The upper outer layer 101 and the upper inner layer 102 may comprise glass fibre laminates. For example, one or more glass fibre laminates may be arranged to form the upper outer layer 101 and/or the upper inner layer 102. The fibres (e.g., glass fibres) may be oriented bidirectionally to enhance the torsional stiffness of the wind turbine blade 7. In other examples, the fibres may be arranged unidirectionally. In further examples, the upper layers 101 and/or 102 comprise laminates with unidirectional fibres and laminates with bidirectional fibres.

The upper blade shell part 100 of this example comprises an upper spar cap structure 110 embedded between the upper outer layer 101 and the upper inner layer 102. The upper spar cap structure 110 is thus arranged between the upper outer layer 101 and the upper inner layer 102. The upper spar cap structure 110 structurally reinforces the upper blade shell part 100.

A core material may be arranged between the upper outer layer 101 and the upper inner layer 102 in some parts of the upper blade shell part 100. For example, a core material may extend a portion between the upper spar cap structure 110 and the leading edge 53. Additionally, or alternatively, a core material may extend a portion between the upper spar cap structure 110 and the trailing edge 54. The core material generally increases the thickness of the blade shell part so as to improve the stiffness without an excessive weight increase. The core material may be made from a lightweight material such as wood (e.g., balsa wood) or foam.

The lower blade shell part 200 may be manufactured like the upper blade shell part 100. As described with respect to the upper blade shell part 100, the lower blade shell part 200 comprises a lower outer layer 201 and a lower inner layer 202. The lower outer layer 201 and/or the lower inner layer 202 may comprise bidirectional glass fibres. A lower spar cap structure 210 is embedded between the lower outer layer 201 and the lower inner layer 202.

The upper spar cap structure 110 and the lower spar cap structure 210 of this example cross the flapwise direction 39. The spar cap structures 110 and 210 face each other. The spar cap structures 110 and 210 may extend a length along the spanwise direction 37 of the wind turbine blade 7. The length of the spar cap structures 110, 210 may be greater than 90% of the entire length of the wind turbine blade 7.

The wind turbine blade 7 comprises a reinforcing structure 300 arranged between the upper blade shell part 100 and the lower blade shell part 200. The reinforcing structure 300 provides stiffness to the wind turbine blade 7. The reinforcing structure 300 comprises a first reinforcing beam 310 arranged between the upper spar cap structure 110 and the lower spar cap structure 210. In further examples, the reinforcing structure comprises a first reinforcing beam and a second reinforcing beam.

The first reinforcing beam 310 of this example extends a length along the spanwise direction 37. The first reinforcing beam 310 may substantially extend between the root portion and the tip portion. The length of the first reinforcing beam 310 may correspond to the length of the spar cap structures 110, 210.

The first reinforcing beam 310 comprises a web 340 extending between an upper flange 320 and a lower flange 330. The upper flange 320 of the first reinforcing beam 310 is joined to the upper blade shell part 100. The upper flange 320 is joined (e.g., bonded) to the upper inner layer 102 at the region of the upper spar cap structure 110. Similarly, the lower flange 330 is joined to the lower inner layer 202 at the region of the lower spar cap structure 210. In this example, the first reinforcing beam 310 and the spar cap structures 110, 210 form the load-carrying structure of the wind turbine blade 7 that serves to withstand loads applied to the wind turbine blade 7.

In this example, the first reinforcing beam 310 comprises a single web. However, in other examples, the first reinforcing beam 310 may comprise two webs extending between the flanges 320 and 330. This configuration may be generally known as a spar box configuration.

An adjoining or connecting layer may be arranged between the flanges 320 and 330 and the corresponding inner layer 102 and 202. The adjoining or connective layers join the flanges 320 and 330 to the blade shell parts 100 and 200. The adjoining or connective layer may comprise an adhesive layer. The first reinforcing beam 310 may thus be bonded to the upper blade shell part 100 and to the lower blade shell part 200. The spar cap structures 110, 210 are arranged between the corresponding flanges 320, 330 and the outer layer 101, 201.

Figure 1 shows a perspective view of a lifting tool 400 for placing a spar cap 500, such as the upper spar cap structure 110 or the lower spar cap structure 210 shown in Figure 3, in a blade mould. The lifting tool 400 comprises a lifting structure 410, a plurality of vacuum elements 420 and an anti-falling mechanism 430. The lifting structure 410 may be a lifting beam or a spreader beam. The lifting structure 410 may form part of a gantry assembly or be suspended from a crane. The lifting structure 410 may be moved in a horizontal plane. For example, the lifting structure 410 may be moved transversal and/or parallel to the lengthwise direction of the spar cap 500.

The plurality of vacuum elements 420 is connected to the lifting structure 410 for releasably attaching the spar cap 500. In other words, the plurality of vacuum elements 420, which may extend from the lifting structure 410, is attachable to and detachable from the spar cap 500.

The anti-falling mechanism 430 is connected to the lifting structure 410. In the example shown in Figure 1, the lifting tool comprises a first anti-falling mechanism 430a and a second anti-falling mechanism 430b. However, the lifting tool 400 may comprise any number of anti-falling mechanisms 430 and is not limited to a particular number thereof. The anti-falling mechanism 430, advantageously, holds or supports the spar cap 500 in the case of vacuum loss.

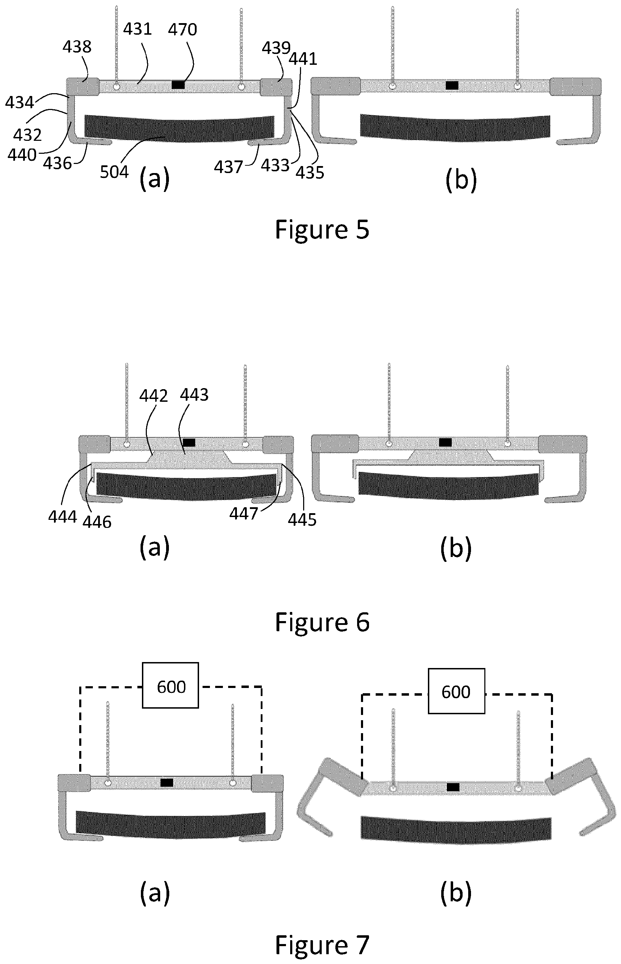

The anti-falling mechanism 430 is configured to change between a closed state and an open state. In the example shown in Figure 1, the first anti-falling mechanism 430a is shown in the closed state, and the second anti-falling mechanism 430b is shown in the open state. The closed state is a state or arrangement for blocking a movement of the spar cap 500, meaning that in this state, in the case of vacuum loss, the spar cap 500 is held by the anti-falling mechanism 430. The open state is a state or arrangement for allowing a movement of the spar cap 500 relative to the anti-falling mechanism 430, meaning that, in the open state, the spar cap 500 may be placed in the blade mould. In particular, the open state allows vertical movement of the spar cap 500. The closed state and the open state of the anti-falling mechanism 430 are described in more detail below in relation to Figures 5, 6 and 7, which each show a frontal view of the lifting tool 400.

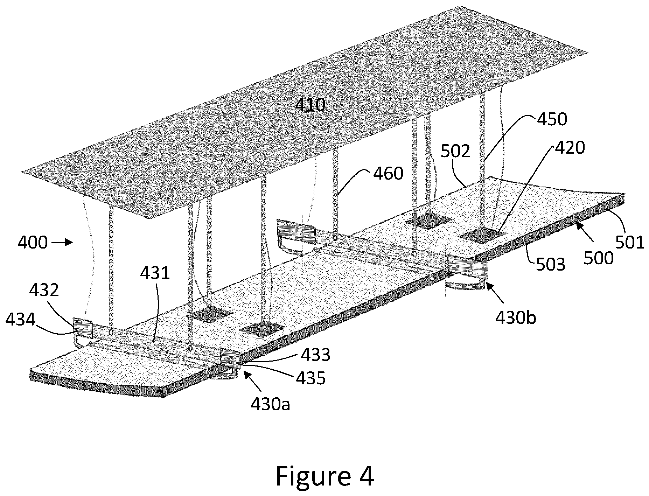

As shown in Figure 4, 5, 6 and 7, the anti-falling mechanism 430 comprises a bar 431 extending between a first side 432 and a second side 433. The anti-fallling mechanism 430 further comprises a first bracket 434 and a second bracket 435. The bar 431 may comprise a foam layer or a foam material (not shown), advantageously, to provide a non-abrasive surface. The brackets 434, 435 and the bar 431 may comprise steel.

The first bracket 434 may be movably connected to the first side 432 of the bar 431, and the second bracket 435 may be movably connected to the second side 433 of the bar 431. Advantageously, in this way, one or more of the brackets 434, 435 may engage with the spar cap 500 when the anti-falling mechanism 430 is in the closed state. For example, the first bracket 434 and/or the second bracket 435 may be configured to respectively engage a first side 501 and a second side 502 of the spar cap 500 when the anti-falling mechanism 430 is in the closed state. The first side 501 and the second side may, respectively, correspond to the trailing edge 54 and the leading edge 53 described in relation to Figure 2. The first anti-falling mechanism 430a in Figure 4 is shown in the closed state. Figures 5a, 6a and 7a show the anti-falling mechanism 430 in a closed state.

In one example, the first bracket 434 and/or the second bracket 435 is slidably connected to the corresponding side 432, 433 (Figures 5 and 6). In another example, the first bracket 434 and/or the second bracket 435 is rotatably connected to the corresponding side 432, 433 (Figure 7). Advantageously, a rotatable or slidable connection may facilitate switching between the closed state and the open state. Whether a rotatable or a slidable connection is preferable may depend on the geometry of the spar cap 500. For instance, the first bracket 434 and the second bracket 435 may be configured to move relative to the bar 431 (e.g., by sliding or rotating) for changing the state of the anti-falling mechanism 430 between the closed state and the open state. In other words, the position of each of the first bracket 434 and the second bracket 435 may be adjusted relative to the bar 431. The second anti-falling mechanism 430b in Figure 1 and the anti-falling mechanism 430 in each of Figures 5b, 6b and 7b are shown in the open state, the brackets 434, 435 having been slid relative to the bar 431 in a direction away from the respective sides 432, 433 compared with the closed state.

As shown in Figures 5, 6 and 7, which each show a frontal view of the lifting tool 400, the first bracket 434 may comprise a bracket lower portion 436 and/or the second bracket 435 may comprise a bracket lower portion 437. Resultingly, the first bracket 434 and/or the second bracket 435 may comprise an L-shaped or a C-shaped cross-section. The lower portions 436, 437 are configured to face the spar cap 500 when the anti-falling mechanism 430 is in the closed state and the plurality of vacuum elements 420 is attached to the spar cap 500. In other words, when the anti-falling mechanism 430 is in the closed state and the plurality of vacuum elements 420 is attached to the spar cap 500, the lower portions 436, 437 extend in a direction substantially parallel to a lower surface 503 of the spar cap 500. Advantageously, therefore, the lower portions 436, 437 may support the spar cap 500 in the case of vacuum loss. In one example, a cross-section 504 the spar cap 500 is received between the bracket lower portion 436 of the first bracket 434 and/or the bracket lower portion 437 of the second bracket 435 and the bar 431. The lower bracket portion 437 may comprise a foam layer or a foam material, advantageously, to provide a non-abrasive surface. The size of the lower bracket portions 436, 437 may depend on mass of spar cap 500 (e.g., the heavier the spar cap 500, the longer the lower bracket portions 436, 437).

The first bracket 434 may be movably connected to the first side 432 of the bar 431 by a first bracket connecting portion 438, and the second bracket 435 may be movably connected to the second side 433 of the bar 431 by a second bracket connecting portion 439. The first bracket 434 may comprise a first web portion 440 connecting the first bracket connecting portion 438 to the first bracket lower portion 436, and the second bracket 435 may comprise a second web portion 441 connecting the second bracket connecting portion 439 to the second bracket lower portion 437.

The anti-falling mechanism 430 may comprise an actuator system 470. The actuator system 470 may be configured to move the first bracket 434 and the second bracket 435 relative to the bar 431. Therefore, advantageously, the anti-falling mechanism 430 may be changed between the open state and the closed state without manual intervention. The actuator system 470 may comprise a linear actuator and/or a rotary actuator. In one example, the actuator system 470 comprises a first linear actuator to slidably move the first bracket 434 relative to the bar 431 and a second linear actuator to slidably move the second bracket 435 relative to the bar 431. In another example, the actuator system 470 comprises a first rotary actuator to rotate the first bracket 434 relative to the bar and a second rotary actuator to rotate the second bracket 435 relative to the bar 431.

As shown in Figure 6, the anti-falling mechanism 430 may comprise a guiding element 442 to engage the anti-falling mechanism 430 on a cross-section 504 of the spar cap 500. In one example, the guiding element 442 is a fixed horizontal element. Advantageously, the guiding element 442 may enable accurate positioning of the anti-falling mechanism 430. Advantageously, the guiding element 442 may comprise aluminium due to its lightness compared with steel, for instance.

The guiding element 442 may comprise a central member 443 extending from a first end 444 to a second end 445. A first stopper 446 may be arranged at the first end 444, and a second stopper 447 may be arranged at the second end 448. The guiding element 442 is configured to engage the cross-section 504 of the spar cap 500 between the first stopper 446 and the second stopper 447, which, advantageously, may stabilize the spar cap 500 when the spar cap 500 is lifted.

As shown in Figure 7, the lifting tool 400 may comprise a controller 600. The controller 600 is configured to control the operation of the anti-falling mechanism 430. For example, the controller 600 may be configured to obtain a target state of the anti-falling mechanism 430. In other words, the controller 600 may be configured to determine whether anti-falling mechanism 430 is desired to be in the closed state or the open state. The controller 600 may be configured to instruct the anti-falling mechanism 430 to change between the closed state and the open state (i.e., to change from the closed state to the open state or *vice versa*) to reach the obtained target state. Advantageously, therefore, the anti-falling mechanism 430 may change between the closed state and the open state without manual intervention. In the case of the lifting tool 400 comprising more than one anti-falling mechanism 430, such as in Figure 1, the anti-falling mechanisms 430a, 430b may be instructed to change between the closed state and the open state simultaneously or sequentially. The controller 600 may be configured to transmit a control signal to, for example, a user interface device, when the anti-falling mechanism 430 changes between the closed state and the open state. Similarly, the controller 600 may be configured to receive instructions from the user interface device that cause the controller 600 to control the operation of the anti-falling mechanism 430.

In one example, in obtaining a target state of the anti-falling mechanism 430, the controller 600 may be configured to receive an indication of a distance between the anti-falling mechanism 430 and the spar cap 500 and may be configured to determine the target state based on the indication of the distance. For instance, an indication of a distance between the anti-falling mechanism 430 and the spar cap 500 below a certain threshold (e.g., 1 m) may cause the controller 600 to determine that the target state is an open state. The anti-falling mechanism 430 may comprise a distance sensor to sense the distance between the anti-falling mechanism 430 and the spar cap 420, and the controller 600 may be configured to receive, from the distance sensor, the sensed distance.

In one example, in being configured to instruct the anti-falling mechanism 430 to change between the closed state and the open state, the controller 600 is configured to operate the actuator system 470. To this end, the controller 600 may be in electronic (e.g., wireless) communication with the actuator system 470.

The controller 600 may also be configured to instruct the plurality of vacuum elements 420 to release the spar cap 500. To this end, the controller 600 may be in electronic (e.g., wireless) communication with the plurality of vacuum elements 420. For example, when the target state is the open state, the controller 600 may be configured to instruct the anti-falling mechanism 430 to reach the open state and to instruct the plurality of vacuum elements 420 to release the spar cap 500 after the anti-falling mechanism reaches the open state. Advantageously, therefore, the spar cap 500 may be placed into the mould without manual intervention.

As shown in Figure 4, the lifting tool 100 may comprise a plurality of vacuum hoisting devices 450 to lift and/or lower the plurality of vacuum elements 420 relative to the lifting structure 410. Similarly, the lifting tool 400 may comprise an anti-fall hoisting device 460 to lift and/or lower the anti-falling mechanism 430 relative to the lifting structure 400. The controller 600 may be configured to operate the plurality of vacuum hoisting devices 450 and/or the anti-fall hoisting device 460. The length of the vacuum hoisting devices 450 may be different to the length of the anti-fall hoisiting device 460. This difference, advantageously, may enable the vacuum elements 420 and the anti-falling mechanism 430 to be positioned at different heights relative to the lifting structure 410.

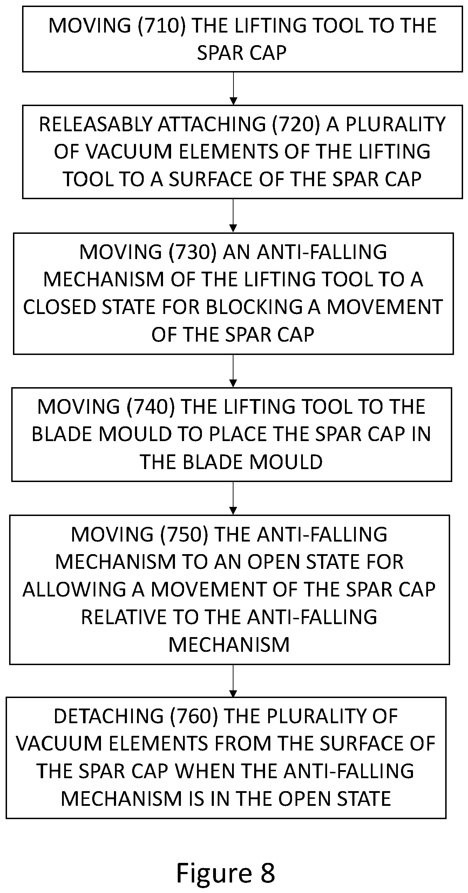

Figure 8 shows a flow chart of a method of placing the spar cap 500 in a blade mould using the lifting tool 400 described above. Generally, the movement of the spar cap 500 is from the site of manufacture of the spar cap 500 or a storage facility for the spar cap to the blade mould, where the spar cap 500 is arranged between the upper outer layer 101 and the upper inner layer 102 (see Figure 3). The method may be controlled by the controller 600.

The method comprises moving 710 the lifting tool 400 to the spar cap 500; releasably attaching 720 the plurality of vacuum elements 420 of the lifting tool 400 to a surface of the spar cap 500; moving 730 the anti-falling mechanism 430 of the lifting tool to 400 the closed state for blocking a movement of the spar cap 500; moving 740 the lifting tool 400 to the blade mould to place the spar cap 500 in the blade mould; moving 750 the anti-falling mechanism 430 to the open state for allowing a movement of the spar cap 500 relative to the anti-falling mechanism 430; and detaching 760 the plurality of vacuum elements 420 from the surface of the spar cap 500 when the anti-falling mechanism is in the open state.

In the case that the anti-falling mechanism 430 comprises the first bracket 434 and the second bracket 435, as described above, moving 730 the anti-falling mechanism 430 to the closed state comprises approaching the first bracket 434 to the second bracket 435, and moving 750 the anti-falling mechanism 430 to open state comprises moving away the first bracket 434 from the second bracket 435. In this way, the spar cap 600 may be held, supported or clasped by the anti-falling mechanism 430.

The method may comprise positioning the guiding element 442 of the anti-falling mechanism 430 on a cross-section of the spar cap 600. As described above, the guiding element 442 may, advantageously, facilitate accurate positioning of the anti-falling mechanism 430 and/or may stabilize the spar cap 600 when the spar cap 600 is lifted.

The method may comprise lowering the plurality of vacuum elements 420 before detaching 760 the plurality of vacuum elements 420 from the surface of the spar cap 600. Advantageously, therefore, if the anti-falling mechanism 430 fails after the vacuum elements 420 have been detached, there is a reduced risk of the spar cap 600 being damaged.

The method may comprise lifting (i.e., removing the anti-falling mechanism 430 before detaching 760 the plurality of vacuum elements 420 from the surface of the spar cap 600. In this way, advantageously, the spar cap 600 may be more accurately placed in the blade mould. In other words, the spar cap 600 may be placed in the blade mould without the presence of the anti-falling 430 mechanism interfering with its placement.

For reasons of completeness, various aspects of the present disclosure are set out in the following numbered clauses:
Clause 1: A lifting tool for placing a spar cap in a blade mould, the lifting tool comprising:
   a lifting structure;
   a plurality of vacuum elements connected to the lifting structure for releasably attaching the spar cap; and
   an anti-falling mechanism connected to the lifting structure configured to change between:
      a closed state for blocking a movement of the spar cap; and
      an open state for allowing a movement of the spar cap relative to the anti-falling mechanism.
Clause 2: The lifting tool according to clause 1, wherein the anti-falling mechanism comprises:
   a bar extending between a first side and a second side;
   a first bracket movably connected to the first side of the bar;
   a second bracket movably connected to the second side of the bar;
   wherein the first bracket and the second bracket are configured to move relative to the bar for changing the state of the anti-falling mechanism between the closed state and the open state.
Clause 3: The lifting tool according to clause 2, wherein the first bracket and/or the second bracket are configured to respectively engage a first side and a second side of the spar cap when the anti-falling mechanism is in the closed state.
Clause 4: The lifting tool according to any of clauses 2 - 3, wherein at least one of the first bracket and the second bracket is slidably connected to the bar.
Clause 5: The lifting tool according to any of clauses 2-4, wherein at least one of the first bracket and the second bracket is rotatably connected to the bar.
Clause 6: The lifting tool according to any of clauses 2 - 5, wherein the first and/or the second bracket comprises a bracket lower portion, and wherein the anti-falling mechanism is configured to receive a cross-section of the spar cap between the bracket lower portion of the first and/or the second bracket and the bar.
Clause 7: The lifting tool according to any of clauses 2-6, wherein the first and/or the second bracket comprises an L-shaped or a C-shaped cross-section.
Clause 8: The lifting tool according to any of clauses 2-7, wherein the anti-falling mechanism comprises an actuator system to move the first and the second bracket relative to the bar.
Clause 9: The lifting tool according to clause 8, wherein the actuator system comprises:
   a first linear actuator to slidably move the first bracket relative to the bar; and
   a second linear actuator to slidably move the second bracket relative to the bar.
Clause 10: The lifting tool according to clause 8, wherein the actuator system comprises:
   a first rotary actuator to rotate the first bracket relative to the bar; and
   a second rotary actuator to rotate the second bracket relative to the bar.
Clause 11: The lifting tool according to any of clauses 1 - 10, wherein the anti-falling mechanism comprises a guiding element to engage the anti-falling mechanism on a cross-section of the spar cap.
Clause 12: The lifting tool according to any of clauses 1 - 11, further comprising:
   a plurality of vacuum hoisting devices to lift and/or lower the plurality of vacuum elements relative to the lifting structure; and
   an anti-fall hoisting device to lift and/or lower the anti-falling mechanism relative to the lifting structure.
Clause 13: The lifting tool according to any of clauses 1 - 12, further comprising:
   a controller configured to control the operation of the anti-falling mechanism.
Clause 14: The lifting tool according to clause 13, wherein the controller is configured to:
   obtain a target state of the anti-falling mechanism;
   instruct the anti-falling mechanism to change between the closed state and the open state to reach the obtained target state.
Clause 15: The lifting tool according to clause 14, wherein the anti-falling mechanism comprises:
   a bar extending between a first side to a second side;
   a first bracket movably connected to the first side of the bar;
   a second bracket movably connected to the second side of the bar;
   wherein the first bracket and the second bracket are configured to move relative to the bar for changing the state of the anti-falling mechanism between the closed state and the open state;
   an actuator system to move the first and the second bracket relative to the bar; and
   wherein to instruct the anti-falling mechanism to change between the closed state and the open state comprises operating the actuator system.
Clause 16: The lifting tool according to any of clauses 13 - 15, wherein the controller is further configured to:
   instruct the plurality of vacuum elements to release the spar cap.
Clause 17: A method for placing a spar cap in a blade mould using a lifting tool, wherein the method comprises:
   moving the lifting tool to the spar cap;
   releasably attaching a plurality of vacuum elements of the lifting tool to a surface of the spar cap;
   moving an anti-falling mechanism of the lifting tool to a closed state for blocking a movement of the spar cap;
   moving the lifting tool to the blade mould to place the spar cap in the blade mould;
   moving the anti-falling mechanism to an open state for allowing a movement of the spar cap relative to the anti-falling mechanism; and
   detaching the plurality of vacuum elements from the surface of the spar cap when the anti-falling mechanism is in the open state.
Clause 18: The method according to clause 17, further comprising:
   positioning a guiding element of the anti-falling mechanism on a cross-section of the spar cap.
Clause 19: The method according to any of clauses 17 - 18, further comprising:
   lowering the plurality of vacuum elements before detaching the plurality of vacuum elements from the surface of the spar cap.
Clause 20: The method according to any of clauses 17 - 19, further comprising:
   lifting the anti-falling mechanism before detaching the plurality of vacuum elements from the surface of the spar cap.

## Claims

1. A lifting tool (400) for placing a spar cap (500) in a blade mould, the lifting tool comprising:
a lifting structure (410);
a plurality of vacuum elements (420) connected to the lifting structure for releasably attaching the spar cap; and
an anti-falling mechanism (430) connected to the lifting structure configured to change between:
a closed state for blocking a movement of the spar cap; and
an open state for allowing a movement of the spar cap relative to the anti-falling mechanism.

2. The lifting tool according to claim 1, wherein the anti-falling mechanism comprises:
a bar (431) extending between a first side (432) and a second side (433);
a first bracket (434) movably connected to the first side of the bar;
a second bracket (435) movably connected to the second side of the bar;
wherein the first bracket and the second bracket are configured to move relative to the bar for changing the state of the anti-falling mechanism between the closed state and the open state.

3. The lifting tool according to claim 2, wherein at least one of the first bracket and the second bracket is slidably connected to the bar.

4. The lifting tool according to any of claims 2-3, wherein at least one of the first bracket and the second bracket is rotatably connected to the bar.

5. The lifting tool according to any of claims 2-4, wherein the first and/or the second bracket comprises an L-shaped or a C-shaped cross-section.

6. The lifting tool according to any of claims 2-5, wherein the anti-falling mechanism comprises an actuator system (470) to move the first and the second bracket relative to the bar.

7. The lifting tool according to any of claims 1-6, wherein the anti-falling mechanism comprises a guiding element (442) to engage the anti-falling mechanism on a cross-section (504) of the spar cap.

8. The lifting tool according to any of claims 1 - 7, further comprising:
a plurality of vacuum hoisting devices (450) to lift and/or lower the plurality of vacuum elements relative to the lifting structure; and
an anti-fall hoisting device (460) to lift and/or lower the anti-falling mechanism relative to the lifting structure.

9. The lifting tool according to any of claims 1 - 8, further comprising:
a controller (600) configured to control the operation of the anti-falling mechanism.

10. The lifting tool according to claim 9, wherein the controller is configured to:
obtain a target state of the anti-falling mechanism;
instruct the anti-falling mechanism to change between the closed state and the open state to reach the obtained target state.

11. The lifting tool according to any of claims 9 - 10, wherein the controller is further configured to:
instruct the plurality of vacuum elements to release the spar cap.

12. A method for placing a spar cap (500) in a blade mould using a lifting tool (400=, wherein the method comprises:
moving (710) the lifting tool to the spar cap;
releasably attaching (720) a plurality of vacuum elements (420) of the lifting tool to a surface of the spar cap;
moving (730) an anti-falling mechanism (430) of the lifting tool to a closed state for blocking a movement of the spar cap;
moving (740) the lifting tool to the blade mould to place the spar cap in the blade mould;
moving (750) the anti-falling mechanism to an open state for allowing a movement of the spar cap relative to the anti-falling mechanism; and
detaching (760) the plurality of vacuum elements from the surface of the spar cap when the anti-falling mechanism is in the open state.

13. The method according to claim 12, further comprising:
positioning a guiding element (442) of the anti-falling mechanism on a cross-section (504) of the spar cap.

14. The method according to any of claims 12 - 1, further comprising:
lowering the plurality of vacuum elements before detaching the plurality of vacuum elements from the surface of the spar cap.

15. The method according to any of claims 12 - 14, further comprising:
lifting the anti-falling mechanism before detaching the plurality of vacuum elements from the surface of the spar cap.
